# EUROPÄISCHE PATENTANMELDUNG

(11) **EP 0 546 487 A2**
(43) Veröffentlichungstag der Anmeldung: **16.06.1993**
(21) Anmeldenummer: 92120831.0
(22) Anmeldetag: 07.12.1992
(51) Int. Cl.: H02H 9/04, H04M 3/18

(54) **Schaltungsanordnung zum Schutz von Schnittstellenschaltungen vor Überspannungen**

(30) Priorität: 13.12.1991 DE 4141074
(71) Anmelder: Siemens Nixdorf Informationssysteme Aktiengesellschaft, D-33102 Paderborn (DE)
(72) Erfinder: Keller, Walter, Dipl.-Ing., W-3155 Edemissen-Plockhorst (DE); Raabe, Peter, Dipl.-Ing., W-1000 Berlin 42 (DE); Fichter, Martin, Dipl.-Ing. (FH), W-1000 Berlin 51 (DE)
(74) Vertreter: Fuchs, Franz-Josef, Dr.-Ing.

(57) **Zusammenfassung**

Die Erfindung betrifft eine Schaltungsanordnung zum Schutz einer an zweidrähtige Teilnehmeranschlußleitungen angeschlossenen Schnittstellenschaltung gegen auf den Teilnehmeranschlußleitungen auftretende Überspannungen, wobei die Schnittstellenschaltung einen Übertrager zur Signalein-und/oder Signalauskopplung aufweist, dessen leitungsseitige Mittelanzapfung auf einem Gleichspannungspotential liegt. Der Schutz erfolgt dadurch, daß die leitungsseitige Mittelanzapfung (17, 27) des Übertragers (T10, T20) über ein Sicherungselement (Si10, Si20) mit dem Gleichspannungspotential verbunden ist, und daß die Verbindung zwischen Sicherungselement und Gleichspannungspotential über ein Überspannungsableitelement (Ts10, Ts20) mit Masse verbunden ist.

## Beschreibung

Die Erfindung betrifft eine Schaltungsanordnung zum Schutz einer an zweidrähtige Teilnehmeranschlußleitungen angeschlossenen Schnittstellenschaltung gegen auf den Teilnehmeranschlußleitungen auftretende Überspannungen, wobei die Schnittstellenschaltung einen Übertrager zur Signalein- und/oder Signalauskopplung aufweist, dessen leitungsseitige Mittelanzapfung auf einem Gleichspannungspotential liegt.

Solche Schnittstellenschaltungen werden beispielsweise für die Signalüertragung in ISDN-Telekommunikationsanlagen verwendet. Aus " ISDN Das künftige Fernmeldenetz der Deutschen Bundespost; 2. Auflage R.v.Decker's Verlag, Seite 39, Bild 2-5 " ist der paarweise Einsatz solcher Schnittstellenschaltungen für die zweidrähtige Sende-Teilnehmeranschlußleitung und die zweidrähtige Empfänger-Teilnehmeranschlußleitung bekannt.

Der dargestellte ISDN-Netzabschluß hat jeweils eine Schnittstellenschaltung in Sende- und Empfangsrichtung, die jeweils über zweidrähtige Teilnehmeranschlußleitungen mit der entsprechenden Schnittstellenschaltung des angeschlossenen Endgerätes verbunden sind. Zur Signalein- bzw. Signalauskopplung weist jede dieser Schnittstellenschaltungen einen Übertrager auf, der zur sogenannten Phantomspeisung des Endgerätes eine leitungsseitige Mittelanzapfung hat, die auf einem Gleichspannungspotential liegt.

Im Netzabschluß sind die Mittelanzapfungen der Übertrager der beiden Schnittstellenspannungen mit einer Speisespannungsquelle verbunden. Im Endgerät sind die entsprechenden Mittelanzapfungen mit einer Versorgungsspannungserzeugung verbunden.

Auf den Teilnehmeranschlußleitungen können Überspannungen auftreten, die zu einer Zerstörung der Schnittstellenschaltungen führen können. Diese Überspannungen können durch Kontakt der Teilnehmeranschlußleitung mit der 220V-Netzspannung, durch induzierte Spannungen, sowie durch atmosphärische Entladungen verursacht sein und verursachen einen Ableitstrom gegen Masse (Erde). Atmosphärische Entladungen haben energiereiche transiente Überspannungen auf der Teilnehmeranschlußleitung zur Folge, die die Bauelemente der angeschlossenen Schnittstellenschaltung nur kurzfristig belasten.

Die transienten Überspannungen, denen eine Schnittstellenschaltung in einer Telekommunikationsanlage standhalten muß, sind in der FTZ-Richtlinie 12 TR 1 beschrieben. Einwirkungen dieser Überspannungen dürfen nicht zu einer bleibenden Funktionsstörung der Schnittstellenschaltung führen.

Bei Kontakt der Teilnehmeranschlußleitungen mit der 220V-Netzspannung muß dagegen nur eine Zerstörung der Schnittstellenschaltung verhindert werden, die Funktionsfähigkeit muß nach einem solchen Kontakt nicht mehr gegeben sein.

Alle diese Überspannungen haben als Bezugspotential Masse (Erde) und können an allen Stellen, an denen die Schnittstellenschaltung mit Masse gekoppelt ist, Ableitströme verursachen.

Zum Schutz der Schnittstellenschaltung werden bei bekannten Lösungen die Teilnehmeranschlußleitungen über Überspannungsableitelemente, beispielsweise edelgasgefüllte Überspannungsableiter oder Varistoren, mit Masse (Erde) verbunden. Bis zu einer vorgegebenen Ansprechspannung sind diese Überspannungsableiter hochohmig. Wird diese Spannung überschritten, werden sie leitend und bleiben in diesem Zustand bis ein bestimmter Mindeststrom unterschritten wird.

Als weitere Maßnahme können in der Schnittstellenschaltung temperaturabhängige Längswiderstände vorgesehen sein, die auf den von einer Überspannung verursachten Ableitstrom mit einer exponentiellen Vergrößerung ihres Widerstandswertes reagieren.

Beide Maßnahmen haben den Nachteil, daß sie durch Bauteiletoleranzen die Symmetrieeigenschaften von Schnittstellenschaltungen negativ beeinflussen. So hat beispielsweise die parasitäre Kapazität zwischen den Anschlüssen von Überspannungsableitern eine bestimmten Streuung, wodurch die Symmetrie verändert wird.

Es ist Aufgabe der Erfindung eine Schaltungsanordnung anzugeben, mit der ein ausreichender Schutz der Schnittstellenschaltung gegen die oben beschriebenen Überspannungen ohne Beeinflussung der Symmetrieeigenschaften anzugeben.

Ausgehend von einer Schaltungsanordnung eingangs genannter Art löst die Erfindung diese Aufgabe dadurch, daß die leitungsseitige Mittelanzapfung des Übertragers über ein Sicherungselement mit dem Gleichspannungspotential verbunden ist, und daß die Verbindung zwischen Sicherungselement und Gleichspannungspotential über ein Überspannungsableitelement mit Masse verbunden ist.

Dadurch, daß die Elemente zum Überspannungsschutz nicht direkt mit der zweidrähtigen Teilnehmeranschlußleitung verbunden sind, wirken sie sich nicht auf die Symmetrieeigenschaften aus. Die Mittelanzapfung stellt für die Signalübertragung und die Symmetrie der Anordnung einen Bezugspunkt dar, der ohne Auswirkung auf dies Signal- übertragungseigenschaften oder die Symmetrieeigenschaften mit toleranzbehafteten Bauteilen mit einem Gleichspannungspotential verbunden werden kann.

Die bei Überspannungen auftretenden Ableitströme werden bei dieser Anordnung durch die leitungsseitige Wicklung des Übertragers über die Elemente zum Überspannungsschutz nach Masse geführt. Dieser Weg kann so ausgelegt werden, daß dies ohne Zerstörung der Schnittstellenschaltung erfolgen kann.

Dafür muß insbesondere die leitungsseitige Wicklung des Übertragers für den Fall der Überspannungsableitung dimensioniert werden. Da dessen Dimensionierung durch das Ziel einer möglichst kompakten Bauform Grenzen gesetzt sind, wird vorzugsweise die leitungsseitige Wicklung des Übertragers so ausgelegt ist, daß die Ableitströme transienter Überspannungen ohne bleibende Veränderung fließen können, und daß bei länger andauernder Überspannungen das Sicherungselement den Stromweg unterbricht.

Für die maximal mögliche Belastbarkeit des Übertragers besteht eine Abhängigkeit von der Impulsdauer des Ableitstromes. Je kürzer der Ableitstrom ist, umso größer kann seine Spitzenwert sein, ohne daß eine Zerstörung oder bleibende Veränderung der Übertragungseigenschaften verursacht wird. Die maximal mögliche Belastbarkeit des Übertragers, als Funktion der Impulsdauer und Impulsamplitude, wird durch Wicklungsaufbau, Bauform, thermischen Verhalten und anderen Materialkostanten beeinflußt und kann aus diesen berechnet, oder durch Messung bestimmt werden.

Diese Funktion kann ausgenutzt werden, die leitungsseitige Wicklung so zu dimensionieren, daß die oben genannten transienten Überspannungen keine bleibende Veränderung verursachen.

Länger andauernde Überspannungen, insbesondere der Kontakt der Teilnehmeranschlußleitung mit der 220V - Netzspannung, führen zu hohen thermischen Belastungen. Durch entsprechende Dimensionierung des Sicherungselements kann verhindert werden, daß diese Belasung auftritt. Entprechend kleiner kann der Übertrager dimensioniert werden.

Vorzugsweise wird eine Schmelzsicherung als Sicherungselement verwendet. Die bei Schmelzsicherungen vorhandene Abhängigkeit der Unterbrechung von Strom und Stromdauer ermöglicht die Auswahl einer Sicherung, die die oben genannten Bedingungen erfüllt.

In einer Weiterbildung der Erfindung wird das Überspannungsableitelement von mehreren Schnittstellenschaltungen gemeinsam verwendet. Dies ist möglich, da das Überspannungsableitelement direkt mit einem Punkt verbunden ist, der auf einem gemeinsamen Gleichspannungspotential liegt und keinen Signalpegel führt.

Im folgenden wird die Erfindung an Hand eines Ausführungsbeispiels näher erläutert. Es zeigen:
Fig.1 die Schnittstellenschaltungen einer ISDN-So-Schnittstelle nach dem Stand der Technik;
Fig.2 ein Ausführungsbeispiel für Schnittstellenschaltungen einer ISDN-So-Schnittstelle mit dem erfindungsgemäßen Überspannungsschutz.

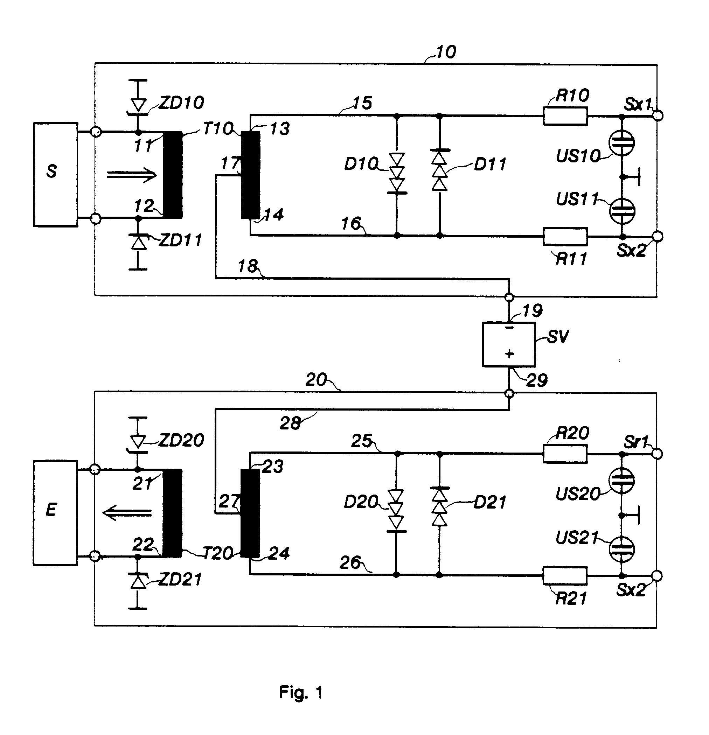

In Fig.1 sind die Schnittstellenschaltungen einer ISDN-So-Schnittstelle nach dem Stand der Technik dargestellt.

Diese Schnittstellenschaltungen können als Bestandteil einer Teilnehmeranschlußschaltung einer Telekommunikationsanlage realisiert sein, die noch weitere, für die Erfindung nicht relevante Teile der Signalerzeugung und Verbindungssteuerung enthält.

Für die Sende- und Empfangsrichtung der ISDN-So-Schnittstelle ist jeweils eine identisch aufgebaute Schnittstellenschaltung 10, 20 vorgesehen.

Die Sendeschaltung S der Teilnehmeranschlußschaltung ist mit den Anschlüssen 11 und 12 der Primärwicklung eines Übertragers T10 verbunden. Diese Anschlüsse sind zum Schutz der Sendeschaltung S über Zenerdioden ZD10 bzw. ZD11, deren Durchbruchspannung über der Spitzenspannung des zu übertragenden Signals liegt, mit Masse verbunden.

Die Anschlüsse 13 und 14 der Sekundärwicklung des Übertragers T10 sind mit Leitungen 15 bzw. 16 mit ersten Anschlüssen von Längswiderständen R10 bzw. R11 verbunden, deren zweiter Anschluß mit den Ausgangsklemmen Sx1 bzw. Sx2 verbunden ist. An diese Ausgangsklemmen Sx1 und Sx2 wird die zweidrähtige Teilnehmeranschlußleitung in Senderichtung angeschlossen. Die Leitungen 15 und 16 sind über antiparallel geschaltete Diodenschaltungen D10 und D1 miteinander verbunden. Die Durchlaßspannung dieser Diodenschaltungen D10 und D11 liegt über der Spitzenspannung des zu übertragenden Signals und begrenzt die Differenzspannung an der Sekundärwicklung des Übertragers T10.

Die Längswiderstände R10 und R11 sind als PTC-Widerstände ausgeführt, die bei einer durch erhöhten Stromfluß auftretenden Erwärmung ihren Widerstandswert exponentiell erhöhen und damit den Innenwiderstand der Schnittstellenschaltung verändern. Abweichungen dieser Widerstände vom Nennwert wirken sich auf die Widerstandssymmetrie der Schnittstellenschaltung aus.

Als zusätzliche Schutzmaßnahme sind die Ausgangsklemmen Sx1 und Sx2 über edelgasgefüllte Überspannungsableiter US10 bzw. US11 mit Masse verbunden. Unterschiedliche parasitäre Kapazitäten wirken sich ebenfalls auf die Symmetrieeigenschaften aus.

Zur Phantomspeisung einer über die Teilnehmeranschlußleitung angeschlossenen, nicht dargestellten Teilnehmerendgeräts, ist die Mittelanzapfung 17 der Sekundärwicklung des Übertragers T10 über die Leitung 18 mit einem Anschluß 19 einer Spannungsversorgung SV verbunden.

Die Empfangsschaltung E der Teilnehmeranschlußschaltung ist mit den Anschlüssen 21 und 22 der Sekundärwicklung eines Übertragers T20 verbunden. Diese Anschlüsse sind zum Schutz der Empfangsschaltung E über Zenerdioden ZD20 bzw. ZD21, deren Durchbruchspannung über der Spitzenspannung des zu übertragenden Signals liegt, mit Masse verbunden.

Die Anschlüsse 23 und 24 der Primärwicklung des Übertragers T20 sind mit Leitungen 25 bzw. 26 mit ersten Anschlüssen von Längswiderständen R20 bzw. R21 verbunden, deren zweiter Anschluß mit den Ausgangsklemmen Sr1 bzw. Sr2 verbunden ist. An diese Ausgangsklemmen Sr1 und Sr2 wird die zweidrähtige Teilnehmeranschlußleitung in Empfangsrichtung angeschlossen. Die Leitungen 25 und 26 sind über antiparallel geschaltete Diodenschaltungen D20 und D21 miteinander verbunden. Die Durchlaßspannung dieser Diodenschaltungen D20 und D21 liegt über der Spitzenspannung des zu übertragenden Signals und begrenzt die Differenzspannung an der Primärwicklung des Übertragers T20.

Die Längswiderstände R20 und R21 sind als PTC-Widerstände ausgeführt, die bei einer durch erhöhten Stromfluß auftretenden Erwärmung ihren Widerstandswert exponentiell erhöhen und damit den Innenwiderstand der Schnittstellenschaltung verändern. Abweichungen dieser Widerstände vom Nennwert wirken sich auf die Widerstandssymmetrie der Schnittstellenschaltung aus.

Als zusätzliche Schutzmaßnahme sind die Eingangsklemmen Sr1 und Sr2 über edelgasgefüllte Überspannungsableiter US20 bzw. US21 mit Masse verbunden. Unterschiedliche parasitäre Kapazitäten wirken sich ebenfalls auf die Symmetrieeigenschaften aus.

Zum Schließen des Versorgungsstromweges der Phantomspeisung eines über die Teilnehmeranschlußleitung angeschlossenen, nicht dargestellten Teilnehmerendgeräts, ist die Mittelanzapfung 27 der Primärwicklung des Übertragers T20 über die Leitung 28 mit dem zweiten Anschluß 29 der Spannungsversorgung SV verbunden.

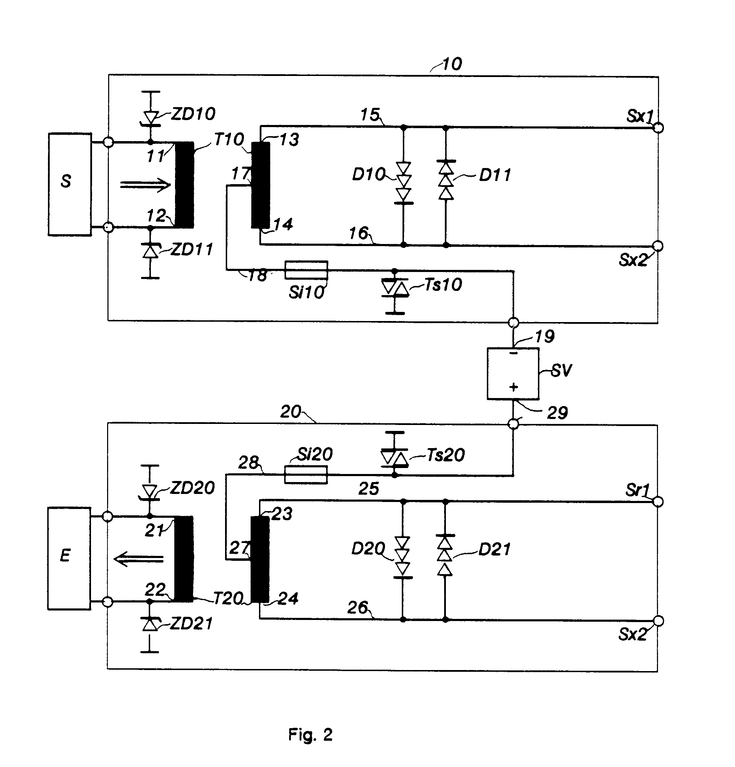

Fig. 2 zeigt ein Ausführungsbeispiel für Schnittstellenschaltungen einer ISDN-So-Schnittstelle mit dem erfindungsgemäßen Überspannungsschutz. Soweit die Schaltungsanordnung gegenüber Fig.1 unverändert ist, sind auch die gleichen Bauteilebezeichnungen verwendet.

Die Sendeschaltung S der Teilnehmeranschlußschaltung ist mit den Anschlüssen 11 und 12 der Primärwicklung eines Übertragers T10 einer Schnittstellenschaltung 10 verbunden. Diese Anschlüsse sind zum Schutz der Sendeschaltung S über Zenerdioden ZD10 bzw. ZD11, deren Durchbruchspannung über der Spitzenspannung des zu übertragenden Signals liegt, mit Masse verbunden.

Die Anschlüsse 13 und 14 der Sekundärwicklung des Übertragers T10 sind mit Leitungen 15 bzw. 16 mit den Ausgangsklemmen Sx1 bzw. Sx2 verbunden ist. An diese Ausgangsklemmen Sx1 und Sx2 wird die zweidrähtige Teilnehmeranschlußleitung in Senderichtung angeschlossen. Die Leitungen 15 und 16 sind über antiparallel geschaltete Diodenschaltungen D10 und D11 miteinander verbunden. Die Durchlaßspannung dieser Diodenschaltungen D10 und D11 liegt über der Spitzenspannung des zu übertragenden Signals und begrenzt die Differenzspannung an der Sekundärwicklung des Übertragers T10.

Längswiderstände und Überspannungsableiter wie in Fig.1 sind nicht vorgesehen.

Zur Phantomspeisung einer über die Teilnehmeranschlußleitung angeschlossenen, nicht dargestellten Teilnehmerendgeräts, ist die Mittelanzapfung 17 der Sekundärwicklung des Übertragers T10 über die Leitung 18 einem ersten Anschluß einer Schmelzsicherung Si10 verbunden. Deren zweiter Anschluß ist mit einem Anschluß 19 einer Spannungsversorgung SV verbunden. Diese Verbindung ist über einen Überspannungsableiter Ts10, der in diesem Beispiel als eine Halbleiterschaltung ausgeführt ist, mit Masse verbunden.

Die Empfangsschaltung E der Teilnehmeranschlußschaltung ist mit den Anschlüssen 21 und 22 der Sekundärwicklung eines Übertragers T20 einer Schnittstellenschaltung 20 verbunden. Diese Anschlüsse sind zum Schutz der Empfangsschaltung E über Zenerdioden ZD20 bzw. ZD21, deren Durchbruchspannung über der Spitzenspannung des zu übertragenden Signals liegt, mit Masse verbunden.

Die Anschlüsse 23 und 24 der Primärwicklung des Übertragers T20 sind mit Leitungen 25 bzw. 26 mit den Ausgangsklemmen Sr1 bzw. Sr2 verbunden ist. An diese Ausgangsklemmen Sr1 und Sr2 wird die zweidrähtige Teilnehmeranschlußleitung in Empfangsrichtung angeschlossen. Die Leitungen 25 und 26 sind über antiparallel geschaltete Diodenschaltungen D20 und D21 miteinander verbunden. Die Durchlaßspannung dieser Diodenschaltungen D20 und D21 liegt über der Spitzenspannung des zu übertragenden Signals und begrenzt die Differenzspannung an der Primärwicklung des Übertragers T20.

Zum Schließen des Versorgungsstromweges der Phantomspeisung eines über die Teilnehmeranschlußleitung angeschlossenen, nicht dargestellten Teilnehmerendgeräts, ist die Mittelanzapfung 27 der Sekundärwicklung des Übertragers T20 über die Leitung 28 einem ersten Anschluß einer Schmelzsicherung Si20 verbunden. Deren zweiter Anschluß ist mit einem Anschluß 29 der Spannungsversorgung SV verbunden. Diese Verbindung ist über einen Überspannungsableiter Ts20, der in diesem Beispiel als eine Halbleiterschaltung ausgeführt ist, mit Masse verbunden.

Tritt beispielsweise an dem Anschluß Sx1 eine Überspannung auf, kommt ein Ableitstrom über die Verbindungsleitung 15, den Übertrager T10 die Schmelzsicherung Si10 und den Überspannungsableiter Ts1 zustande. Überschreitet der Spannungsabfall an der Teilwicklung zwischen den Anschlüssen 13 und 17 die Durchlaßspannung der Diodenschaltungen D10 oder D11, so fließt auch ein Teilstrom über die entsprechende Diodenschaltung und die Teilwicklung zwischen den Anschlüssen 14 und 17.

Handelt es sich um eine transiente Überspannung, unterbricht die Schmelzsicherung Si10 diesen Stromweg nicht. Nach der Überspannung bleibt die Schnittstellenschaltung voll funktionsfähig.

Wird die Überspannung beispielsweise durch einen Kontakt mit der 220V -Netzspannung verursacht, unterbricht die Schmelzsicherung diesen Stromweg nach einer bestimmten Ansprechzeit. Dies erfolgt bevor eine bleibende Veränderung wie z.B. eine Zerstörung des Übertragers T10 eintreten kann. Nach der Überspannung ist die Schnittstellenschaltung noch zur Signalübertragung bereit. Eine Phantomspeisung ist nicht mehr möglich, da die Schmelzsicherung ersetzt werden muß.

## Patentansprüche

1. Schaltungsanordnung zum Schutz einer an zweidrähtige Teilnehmeranschlußleitungen angeschlossenen Schnittstellenschaltung (10, 20) gegen auf den Teilnehmeranschlußleitungen auftretende Überspannungen, wobei die Schnittstellenschaltung einen Übertrager (T10, T20) zur Signalein- und/oder Signalauskopplung aufweist, dessen leitungsseitige Mittelanzapfung (17, 27) auf einem Gleichspannungspotential liegt, dadurch gekennzeichnet, daß die leitungsseitige Mittelanzapfung (17, 27) des Übertragers (T10, T20) über ein Sicherungselement (Si10, Si20) mit dem Gleichspannungspotential verbunden ist, und daß die Verbindung zwischen Sicherungselement und Gleichspannungspotential über ein Überspannungsableitelement (Ts10, Ts20) mit Masse verbunden ist.

2. Schaltungsanordnung nach Anspruch 1, dadurch gekennzeichnet, daß die leitungsseitige Wicklung des Übertragers (T10, T20) so ausgelegt ist, daß die Ableitströme transienter Überspannungen ohne bleibende Veränderung fließen können, und daß bei länger andauernder Überspannungen das Sicherungselement (Si10, Si20) den Stromweg unterbricht.

3. Schaltungsanordnung nach Anspruch 2, dadurch gekennzeichnet, daß das Sicherungselement (Si10, Si20) eine metallgekapselte Schmelzsicherung ist.

4. Schaltungsanordnung nach Anspruch 1, dadurch gekennzeichnet, daß das Überspannungsableitelement (Ts10, Ts20) für mehrere Schnittstellenschaltungen gemeinsam verwendet wird.
